# EUROPEAN PATENT APPLICATION

(11) **EP 4 556 832 A1**
(43) Date of publication of application: **21.05.2025**
(21) Application number: 23882316.5
(22) Date of filing: 27.09.2023
(51) Int. Cl.: F27D 1/00, F27D 1/16, C04B 35/66, F16L 59/00

(54) **WET SPRAY MATERIAL FOR FIRING FURNACES AND METHOD FOR INSTALLING SAME**

(30) Priority: 26.10.2022 JP 2022171722
(71) Applicant: Krosakiharima Corporation, Kitakyushu-shi, Fukuoka 806-8586 (JP)
(72) Inventor: KOGA, Masanori, Kitakyushu-shi, Fukuoka 806-8586 (JP); KAWABE, Yuusuke, Kitakyushu-shi, Fukuoka 806-8586 (JP); TOKUTOMI, Atsushi, Kitakyushu-shi, Fukuoka 806-8586 (JP)
(74) Representative: Vossius & Partner Patentanwälte Rechtsanwälte mbB
(86) International application number: PCT/JP2023/035112
(87) International publication number: WO 2024/090106

(57) **Abstract**

The present invention provides a wet spray material for a firing furnace, which is capable of shortening a time until the firing furnace becomes ready for operation after spraying onto a construction target surface of the firing furnace, and a construction method using the wet spray material. Specifically, in the present invention, a refractory raw material comprising 55% by mass to 90% by mass of particles having a particle size of less than 1 mm is kneaded with silica sol and water added thereto, and the resulting kneaded material is pressure-fed to a nozzle 2, and, after adding thereto a slurry or aqueous solution of at least one or more selected from the group consisting of calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and potassium nitrate, in or just before the nozzle 2, sprayed onto a construction target surface S.

## Description

### TECHNICAL FIELD

The present invention relates to a wet spray material for a firing furnace such as an incinerator, a fluidized-bed furnace, an industrial waste kiln/treatment furnace, a circulating fluidized bed (CFB) boiler furnace, a cement production facility furnace, a gasification melting furnace, or a stoker furnace, and a construction method using the wet spray material.

### BACKGROUND ART

A spray construction method is roughly classified into a dry spray construction method and a wet spray construction method, wherein the wet spray construction method is a construction method which comprises kneading a refractory raw material with water added thereto, and then pressure-feeding the resulting kneaded material to a nozzle to spray it therefrom. Further, with a view to improving adherability to a construction target surface, a quick setting agent may be added to a wet spray material used in the wet spray construction method, in or just before a nozzle, as disclosed in, e.g., Patent Document 1. In this case, the quick setting agent is supplied using a pipe different from a pipe for pressure-feeding the kneaded material, and is added to the kneaded material, in or just before the nozzle, i.e., just before spraying.

Meanwhile, the wet spray material is required to become ready for use just after spraying onto the construction target surface, i.e., is required to shorten a time until a furnace becomes ready for operation after spraying onto the construction target surface. In particular, a firing furnace requires a long period, specifically, about 50 or more hours, of drying step after completion of spraying, so that it involves time-consuming and costly problems accordingly. Therefore, particularly in a firing furnace, it is required to shorten a time until the firing furnace becomes ready for operation after spraying onto a construction target surface.

### PRIOR ART DOCUMENTS

### [Patent Document]

Parent Document 1: JP H11-240775 A

### SUMMARY OF INVENTION

### [Technical Problem]

A technical problem to be solved by the present invention is to provide a wet spray material for a firing furnace, which is capable of shortening a time until the firing furnace becomes ready for operation after spraying onto a construction target surface of the firing furnace, and a construction method using the wet spray material.

### [Solution to Technical Problem]

As a result of various tests and researches conducted by the present inventors to solve the above technical problem, the present inventors have found that in order to solve the above technical problem, it is essential to improve adherability and fixability of a spray material to a construction target surface, and, as a prerequisite, to improve transportability of the kneaded material during construction, and improve curability (hardenability) of a sprayed deposit. Further, the present inventors have found that from a viewpoint of realizing shortening or omission of the drying step, it is also essential to ensure explosion resistance of the sprayed deposit while improving the curability thereof.

As a result of various tests and researches further conducted by the present inventors from the above viewpoints, the present inventors have had a finding that it is effective to: set the particle size composition of a refractory raw material such that particles having a particle size of less than 1 mm (hereinafter referred to as "fine particles") are a main fraction; and add, to the refractory raw material, silica sol, as a binder, and a slurry or aqueous solution of at least one or more selected from among metal salts, specifically from the group consisting of calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and potassium nitrate, as a quick setting agent, in appropriate amounts, respectively, and have come to complete the present invention.

Specifically, according to one aspect of the present invention, there is provided a wet spray material for a firing furnace, obtained by adding silica sol, and a slurry or aqueous solution of at least one or more selected from the group consisting of calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and potassium nitrate, to a refractory raw material comprising 55% by mass to 90% by mass of particles having a particle size of less than 1 mm, wherein: the silica sol is added such that an addition rate of a silica solid content falls within the range of 1% by mass to 15% by mass, with respect to 100% by mass of the refractory raw material; and the slurry or aqueous solution of at least one or more selected from the group consisting of calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and potassium nitrate, is added such that an addition rate of a solid content of the at least one or more selected from the group consisting of calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and potassium nitrate falls within the range of 0.01% by mass to 1% by mass in total, with respect to 100% by mass of the refractory raw material.

According to another aspect of the present invention, there is provided a construction method using a wet spray material for a firing furnace, comprising: kneading a refractory raw material comprising 55% by mass to 90% by mass of particles having a particle size of less than 1 mm, with silica sol added thereto; pressure-feeding a resulting kneaded material to a nozzle; and spraying the kneaded material after adding thereto a slurry or aqueous solution of at least one or more selected from the group consisting of calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and potassium nitrate, in or just before the nozzle, wherein: the silica sol is added such that an addition rate of a silica solid content falls within the range of 1% by mass to 15% by mass, with respect to 100% by mass of the refractory raw material; and the slurry or aqueous solution of at least one or more selected from the group consisting of calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and potassium nitrate, is added such that an addition rate of a solid content of the at least one or more selected from the group consisting of calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and potassium nitrate falls within the range of 0.01% by mass to 1% by mass in total, with respect to 100% by mass of the refractory raw material.

### [Advantageous Effects of Invention]

The present invention makes it possible to shorten a time until the firing furnace becomes ready for operation after spraying onto the construction target surface of the firing furnace. That is, according to the present invention, it is possible to shorten or omit the drying step after completion of spraying, and thus a construction period can be shortened, which makes it possible to reduce construction costs, and reduce the amount of fuel used for the drying step to zero or a significantly small value. Thus, according to the present invention, it is possible to contribute to the reduction of energy cost and to contribute to the reduction of CO₂ emissions.

### BRIEF DESCRIPTION OF DRAWINGS

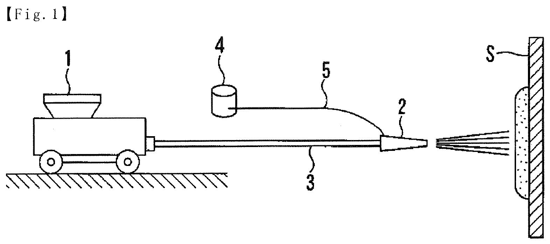

FIG. 1 is an explanatory diagram illustrating a construction method using a wet spray material.

### DESCRIPTION OF EMBODIMENTS

A wet spray material for a firing furnace according to one embodiment of the present invention is obtained by adding silica sol as a binder, and a slurry or aqueous solution of at least one or more selected from the group consisting of calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and potassium nitrate, as a quick setting agent, to a refractory raw material comprising 55% by mass to 90% by mass of particles having a particle size of less than 1 mm. Further, a construction method using a wet spray material for a firing furnace, according to another embodiment of the present invention, comprises: kneading a refractory raw material comprising 55% by mass to 90% by mass of particles having a particle size of less than 1 mm, with silica sol (binder) added thereto; pressure-feeding the resulting kneaded material to a nozzle; and spraying the kneaded material after adding thereto a slurry or aqueous solution (quick setting agent) of at least one or more selected from the group consisting of calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and potassium nitrate, in or just before the nozzle. More specifically, in the construction method using the wet spray material, the refractory raw material and the binder are preliminarily kneaded to form a slurry-like kneaded material, and this kneaded material is pressure-fed toward a nozzle 2 through a pipe 3 by a pressure pump 1, as illustrated in FIG. 1. On the other hand, the quick setting agent is added to the kneaded material through a quick setting agent supply pipe 5 connected to the nozzle 2 or to the pipe 3 at a position just before the nozzle 2, from a quick setting agent tank 4. Then, the resulting wet spray material is sprayed toward a construction target surface of the firing furnace. As just described, in the wet spray material or the construction method, the quick setting agent is pressure-fed through the quick setting agent supply pipe 5 which is a different pathway from the pipe 3 for pressure-feeding the kneaded material, and is added to the kneaded material in or just before the nozzle 2.

In the wet spray material or the construction method, the refractory raw material comprises 55% by mass to 90% by mass of particles having a particle size of less than 1 mm (hereinafter referred to as "fine particles"), as mentioned above. If the content rate of the fine particles in the refractory raw material is less than 55% by mass, fluidity of the kneaded material comprising the refractory raw material is deteriorated, leading to a decrease in transportability of the kneaded material in the pipe 3. Further, adherability also decreases due to the decrease in transportability. On the other hand, if the content rate of the fine particles in the refractory raw material is greater than 90% by mass, the refractory raw material becomes more likely to agglomerate since the silica sol added as a binder is a viscous liquid, leading to a decrease in transportability of the kneaded material. Further, adherability also decreases due to the decrease in transportability. Moreover, the strength of a sprayed deposit decreases, leading to a decrease in explosion resistance of the sprayed deposit. Preferably, the content rater of the fine particles in the refractory raw material is 61% by mass to 85% by mass. Further, from a viewpoint of guarantee the fluidity of the kneaded material while suppressing agglomeration of the refractory raw material, it is preferable to adjust the content rate of particles having a particle size of 0.075 mm or more to fall within the range of 40% by mass to 60% by mass, in terms of percentage of 100 % by mass of the fine particles having a particle size of less than 1 mm.

In the present invention, it is possible to use, as the refractory raw material, any refractory raw material which has heretofore been commonly used for a wet spray material, and examples of the refractory raw material include oxides such as alumina, spinel, magnesia, silica, mullite, alum shale, chamotte, and refractory clay, and non-oxides such as silicon carbide and graphite.

On the other hand, in the present invention, the refractory raw material preferably comprises 3% by mass to 10% by mass of silica fume having a pH of 6.0 to 9.5. Since the silica fume has a particle size of less than 0.075 mm. Thus, when the refractory raw material contains an appropriate amount of silica fume having a pH of 6.0 to 9.5, solation, agglomeration, and the like of the silica sol are appropriately delayed, so that the transportability of the kneaded material is further improved. More specifically, the silica sol used as a binder in the present invention has a pH of about 8.0 to 10.0. Thus, when the silica fume having a pH of 6.0 to pH 9.5, which is at a comparable level to that of the silica sol, is contained in the refractory raw material in an appropriate amount, the solation, agglomeration, and the like of the silica sol, i.e., the decrease in fluidity of the kneaded material, are moderately delayed, so that the transportability of the kneaded material is further improved. It should be noted that although commercially available silica sols include an acidic silica sol having a pH of 2.0 to 4.0, the silica sol used in the present invention is an alkaline silica sol having a pH of 8.0 to 10.0, as mentioned above.

Here, the silica fume means spherical-shaped fine particles obtained from waste gas generated in the course of the refining process of fused zirconia or ferrosilicon. The pH of the silica fume is measured based on JIS Z 8802-2011 "Methods for determination of pH of aqueous solutions".

In the present invention, the particle size of the refractory raw material is the size of a sieve when the refractory raw material is sifted and separated through the use of a sieve. For example, a refractory raw material having a particle size of less than 0.075 mm means a refractory raw material which can pass through a sieve having a sieve mesh of 0.075 mm, and a refractory raw material having a particle size of 0.075 mm or more means a refractory raw material which cannot pass through the sieve having a sieve mesh of 0.075 mm.

In the present invention, silica sol is used as a binder, as mentioned above. The term "silica sol" herein means a solution obtained by dispersing silica particles in solid form, i.e., silica solid content, in water. In the present invention, the silica sol is added such that the addition rate of the silica solid content falls within the range of 1% by mass to 15% by mass, with respect to 100% by mass of the refractory raw material. If the addition rate of the silica solid content exceeds 15% by mass, the fluidity of the kneaded material decreases, leading to a decrease in the transportability. Moreover, the spray material agglomerates before it adheres to the construction target surface, leading to a decrease in the adherability. On the other hand, if the addition rate of the silica solid content is less than 1% by mass, the adherability decreases, and the spray material is less likely to be fixed on the construction target surface, leading to a decrease in the fixability. The addition rate of the silica solid content is preferably 3% by mass to 12% by mass. Further, the concentration of the silica solid content in the silica sol may be set in the rage of 10% by mass to 60% by mass, preferably 20% by mass to 40% by mass.

The term "adhesion" here means that the spray material adheres to the construction target surface, and the term "fixing" means that the spray material remains at a sprayed position on the construction target surface.

If the addition rate of the silica solid content is excessively high, the agglomeration of the spray material occurs excessively early, so that the spray material agglomerates before the spray material adheres to the construction target surface, and becomes more likely to be easily dropped without adhering to the construction target surface, leading to a decrease in the adherability. On the other hand, if the addition rate of the silica solid content is excessively low, the agglomeration of the spray material occurs excessively late, so that the spray material drips along the construction target surface, and becomes more likely to move downwardly from the sprayed position, leading to a decrease in the fixability.

Heretofore, cement such as alumina cement, Portland cement, or magnesia cement has been widely used as a binder for a wet spray material. However, when cement is used as a binder, a hydration reaction occurs at room temperatures to increase the strength of sprayed deposit, and the sprayed deposit becomes less likely to dehydrate, leading to the risk of explosion when the temperature in the furnace rises. In addition, there is a concern that the viscosity of the sprayed deposit is increased to reduce the fluidity thereof, and to excessively increase the curability, leading to a decrease in the adherability.

Therefore, since a long-time drying step is required after completion of spraying, it is difficult to realize shortening or omission of the drying step, and there is a concern that the fluidity and adherability decrease. For this reason, in the present invention, silica sol is used as a binder, substantially without using alumina cement. However, alumina cement may be used in a small amount to the extent that there are no significant problems with the explosion resistance, etc. Specifically, in the present invention, alumina cement may be added in a range of 3% by mass or less, with respect to 100% by mass of the refractory raw material. Obviously, the addition rate of alumina cement is preferably zero.

The present invention uses, as a quick setting agent, a slurry or aqueous solution of at least one or more selected from among metal salts, specifically from the group of metal salts consisting of calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and potassium nitrate (this slurry or aqueous solution will hereinafter be referred to as "inventive slurry or aqueous solution"). The inventive slurry or aqueous solution is added to the kneaded material in or just before the nozzle in the same manner as that for conventional quick setting agents. However, differently from the conventional quick setting agents, the inventive slurry or the aqueous solution is added such that the addition rate of a solid content of the at least one or more selected from the group consisting of calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and potassium nitrate (this solid content will hereinafter be referred to as "slurry solid content or aqueous solution solid content") falls within the range of 0.01% by mass to 1% by mass in total, with respect to 100% by mass of the refractory raw material. Then, ions of the metal salt(s), i.e., the calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and/or potassium nitrate (slurry solid content or aqueous solution solid content) contained in the inventive slurry or aqueous solution exert influence on the silica sol as hydrophilic colloidal silica having a hydroxyl group (-OH), causing agglomeration (quickly setting or salting-out), and adhesion. This is an adhesion mechanism of the present invention.

If the addition rate of the slurry solid content or aqueous solution solid content exceeds 1% by mass, the spray material agglomerates before it adheres to the construction target surface, leading to a decrease in the adherability. On the other hand, if the addition rate of the slurry solid content or aqueous solution solid content is less than 0.01% by mass, an agglomeration force decreases, leading to a decrease in the adherability, and the spray material is less likely to be fixed onto the construction target surface, leading to a decrease in the fixability.

The addition rate of the slurry solid content or aqueous solution solid content is preferably 0.03% by mass to 0.5% by mass. The concentration of the slurry solid content in the inventive slurry may be set in the range of 1% by mass to 50% by mass, preferably 10% by mass to 40% by mass.

The inventive slurry or aqueous solution may comprise, as a solid content thereof, a solid content other than the above-mentioned slurry solid content or aqueous solution solid content. Examples of the solid content other than the slurry solid content or aqueous solution solid content include a fine powder of a metal salts such as potassium hydroxide or sodium silicate, or a refractory material such as alumina or magnesia. However, the inventive slurry or aqueous solution mainly contains, as a solid content thereof, the above-mentioned slurry solid content or aqueous solution solid content. More specifically, it is preferable that the content rate of the slurry solid content or aqueous solution solid content is 80% by mass or more, with respect to 100% by mass or the total of the solid content in the inventive slurry or aqueous solution.

In addition, the "inventive slurry or aqueous solution" used as a quick setting agent in the present invention is preferably a "slurry of at least one of calcium hydroxide and magnesium hydroxide", most preferably a "slurry of calcium hydroxide".

In the present invention, a mixture obtained by adding a silica sol to a refractory raw material comprising 55% by mass to 90% by mass of particles having a particle size of less than 1 mm is kneaded, and the resulting kneaded material is pressure-fed to a nozzle, and sprayed after adding thereto the inventive slurry or aqueous solution, in or just before the nozzle. Although water is contained in the silica sol, water may be further added during or after the kneading. As a method for adding the water, the water may be added before kneading the refractory raw material and the silica sol, or may be added in the course of pressure-feeding the kneaded material to the nozzle after the kneading.

The addition rate of the water may be set in the range of about 3% by mass to about 20% by mass with respect to 100% by mass of the refractory raw material. In a case where only silica sol is added (no water is additionally added), the addition rate of the water is the content rate of water in silica sol to be added, and in a case where water is additionally added, the addition rate of the water means a total amount of the content rate of water in silica sol to be added and the addition rate of water to be additionally added. In addition to silica sol and water, a dispersant such as fibers or sodium tripolyphosphate may be appropriately added to the refractory raw material.

### EXAMPLES

Tables 1 to 3 show respective material compositions of wet spray materials according to Inventive Examples and Comparative Examples, together with the results of respective evaluations of fluidity, adherability, curability, explosion resistance, and comprehensive evaluation performed on the wet spray material in each Example. In Tables 1 to 3, the "refractory raw material" means mainly alumina. As "silica fume" which is one kind of the refractory raw material, a type having a pH of 6.0 to 9.5 was used.

Methods for the evaluations of fluidity, adherability, curability, explosion resistance, and the comprehensive evaluation are as follows.

### < Flowability >

With regard to a kneaded material obtained by adding a silica sol and an appropriate amount of water to the refractory raw material in each Example and kneading them, a tap flow value was measured in accordance with JIS R 2521. As a result, a wet spray material in which the tap flow value was 160 mm or more, a wet spray material in which the tap flow value was 140 mm to less than 160 mm, and a wet spray material in which the tap flow value was less than 140 mm, were evaluated as ⊚ (Flowability: Excellent), ∘ (Flowability: Good), and × (Flowability: NG), respectively. This evaluation of fluidity is also an evaluation of transportability.

### < Adherability >

A quick-setting agent in each Example was added to and rapidly mixed with the kneaded material in the Example obtained in the above manner, and a subsequent time to flow cessation was measured. This time to flow cessation corresponds to a curing time of the wet spray material, and the present inventors have already confirmed that when the time to flow cessation falls within the range of 2 seconds to 15 seconds, adherability to a construction target surface during spraying is good, and when the time to flow cessation falls within the range of 4 seconds to 10 seconds, the adherability is excellent. Specifically, in the evaluation of adherability, a wet spray material in which the time to flow cessation was 4 seconds to 10 seconds, a wet spray material in which the time to flow cessation was 2 seconds to less than 4 seconds or greater than 10 seconds to 15 seconds, and a wet spray material in which the time to flow cessation was less than 2 seconds or greater than 15 seconds, were evaluated as ⊚ (Adherability: Excellent), ∘ (Adherability: Good), and × (Adherability: NG), respectively.

### < Curability >

The quick-setting agent in each Example was added to and rapidly mixed with the kneaded material in the Example obtained in the above manner, and then a time until a penetration value of a push cone reaches 30 mm or more when the surface of the spray material is penetrated with the push cone based on the JHS A 601 "Method for Soil Hardness Test" was measured. As a result, a wet spray material in which the time was 120 minutes or less, a wet spray material in which the time was greater than 120 minutes to 300 minutes, and a wet spray material in which the time was greater than 300 minutes, were evaluated as ⊚ (Curability: Excellent), ∘ (Curability: Good), and × (Curability: NG), respectively. This evaluation of curability is also an evaluation of fixability to the construction target surface during spraying.

### < Explosion resistance >

The quick-setting agent in each Example was added to and rapidly mixed with the kneaded material in the Example obtained in the above manner, and then cured for 24 hours to obtain a columnar test piece having a size of 100 mm diameter × 100 mm height. This test piece was put into a furnace with 800°C atmosphere to check the presence or absence of explosion. Specifically, a wet spray material in which no explosion occurred in the test piece and a wet spray material in which explosion occurred in the test piece were evaluated o (Explosion resistance: Good) and × (Explosion resistance: NG), respectively.

### < Comprehensive Evaluation >

A wet spray material in which all the evaluations of flowability, adherability, and curability were ⊚, and the evaluation of the explosion resistance was ∘, a wet spray material in which with regard to the evaluations of flowability, adherability, and curability, at least one thereof was ∘ and none thereof were ×, and further the evaluation of the explosion resistance was ∘, and a wet spray material in which at least one of the evaluation of flowability, adherability, curability and explosion resistance was ×, were evaluated as ⊚ (Excellent), ∘ (Good), and × (NG), respectively.

**[TABLE 1]**

| | Inventive Example 1 | Inventive Example 2 | Inventive Example 3 | Inventive Example 4 | Inventive Example 5 | Inventive Example 6 | Inventive Example 7 | Inventive Example 8 | Inventive Example 9 | Inventive Example 10 | Inventive Example 11 | Inventive Example 12 |
|---|---|---|---|---|---|---|---|---|---|---|---|---|
| Refractory raw material (particle size: 1 mm or more)/mass% | 45 | 10 | 39 | 39 | 15 | 39 | 39 | 39 | 39 | 39 | 39 | 39 |
| Refractory raw material (particle size: less than 1 mm)/mass% | 48 | 83 | 54 | 58 | 75 | 54 | 54 | 54 | 54 | 54 | 54 | 54 |
| Silica fume (less than 0.075mm)/mass% | 7 | 7 | 7 | 3 | 10 | 7 | 7 | 7 | 7 | 7 | 7 | 7 |
| Silica sol/mass% *² | 2 | 2 | 1 | 3 | 5 | 12 | 15 | 10 | 10 | 10 | 10 | 10 |
| Calcium hydroxide slurry/mass% *² | 0,5 | 0,5 | 0,5 | 0,03 | 0,5 | 0,5 | 0,5 | 0,01 | 0,1 | 0,3 | 1 | 0,5 |
| Fluidity | ○ | ○ | ⊚ | ⊚ | ⊚ | ⊚ | ○ | ⊚ | ⊚ | ⊚ | ⊚ | ⊚ |
| Adherability | ○ | ○ | ○ | ⊚ | ⊚ | ⊚ | ○ | ○ | ⊚ | ⊚ | ○ | ⊚ |
| Curability | ⊚ | ⊚ | ○ | ⊚ | ⊚ | ⊚ | ⊚ | ○ | ⊚ | ⊚ | ⊚ | ⊚ |
| Explosion resistance | ○ | ○ | ○ | ○ | ○ | ○ | ○ | ○ | ○ | ○ | ○ | ○ |
| Comprehensive Evaluation | ○ | ○ | ○ | ⊚ | ⊚ | ⊚ | ○ | ○ | ⊚ | ⊚ | ○ | ⊚ |

| | | | | | | | | | | | | |
|---|---|---|---|---|---|---|---|---|---|---|---|---|
| * 1 : Silica fume is not included * 2 : The addition rate of a solid content with respect to 100 mass% of the refractory raw material | | | | | | | | | | | | |

**[TABLE 2]**

| | Inventive Example 13 | Inventive Example 14 | Inventive Example 15 | Inventive Example 16 | Inventive Example 17 | Inventive Example 18 | Inventive Example 19 | Inventive Example 20 | Inventive Example 21 | Inventive Example 22 | Inventive Example 23 | Inventive Example 24 | Inventive Example 25 | Inventive Example 26 | Inventive Example 27 |
|---|---|---|---|---|---|---|---|---|---|---|---|---|---|---|---|
| Refractory raw material (particle size: 1 mm or more)/mass% | 39 | 39 | 39 | 39 | 39 | 39 | 39 | 39 | 39 | 39 | 39 | 39 | 39 | 39 | 39 |
| Refractory raw material (particle size: less than 1 mm)/mass% | 54 | 54 | 54 | 54 | 54 | 54 | 54 | 54 | 54 | 54 | 54 | 54 | 54 | 61 | 54 |
| Silica fume (less than 0.075mm)/mass% | 7 | 7 | 7 | 7 | 7 | 7 | 7 | 7 | 7 | 7 | 7 | 7 | 7 | | 7 |
| Silica sol/mass% *² | 10 | 10 | 10 | 10 | 10 | 10 | 10 | 10 | 10 | 10 | 10 | 10 | 10 | 10 | 5 |
| Calcium hydroxide slurry/mass% *² | | | | | | | | | | | | | 0,25 | 0,5 | 0,5 |
| Magnesium hydroxide slurry/mass% *² | 0,5 | | | | | | | | | | | | 0,25 | | |
| Calcium chloride aqueous solution/mass% *² | | 0,5 | | | | | | | | | | | | | |
| Potassium chloride aqueous solution/mass% *² | | | 0,5 | | | | | | | | | | | | |
| Magnesium chloride aqueous solution/mass% *² | | | | 0,5 | | | | | | | | | | | |
| Sodium chloride aqueous solution/mass% *² | | | | | 0,5 | | | | | | | | | | |
| Calcium sulfate aqueous solution/mass% *² | | | | | | 0,5 | | | | | | | | | |
| Potassium sulfate aqueous solution/mass% *² | | | | | | | 0,5 | | | | | | | | |
| Sodium sulfate aqueous solution/mass% *² | | | | | | | | 0,5 | | | | | | | |
| Calcium nitrate aqueous solution/mass% *² | | | | | | | | | 0,5 | | | | | | |
| Magnesium nitrate aqueous solution/mass% *² | | | | | | | | | | 0,5 | | | | | |
| Sodium nitrate aqueous solution/mass% *² | | | | | | | | | | | 0,5 | | | | |
| Potassium nitrate aqueous solution/mass% *² | | | | | | | | | | | | 0,5 | | | |
| Alumina cement /mass% | | | | | | | | | | | | | | | 3 |
| Fluidity | ⊚ | ⊚ | ⊚ | ⊚ | ⊚ | ⊚ | ⊚ | ⊚ | ⊚ | ⊚ | ⊚ | ⊚ | ⊚ | ○ | ○ |
| Adherability | ⊚ | ○ | ⊚ | ○ | ○ | ○ | ○ | ○ | ○ | ○ | ○ | ○ | ⊚ | ⊚ | ○ |
| Curability | ⊚ | ○ | ○ | ○ | ○ | ○ | ○ | ○ | ○ | ○ | ○ | ○ | ⊚ | ⊚ | ⊚ |
| Explosion resistance | ○ | ○ | ○ | ○ | ○ | ○ | ○ | ○ | ○ | ○ | ○ | ○ | ○ | ○ | ○ |
| Comprehensive Evaluation | ⊚ | ○ | ○ | ○ | ○ | ○ | ○ | ○ | ○ | ○ | ○ | ○ | ⊚ | ○ | ○ |

| | | | | | | | | | | | | | | | |
|---|---|---|---|---|---|---|---|---|---|---|---|---|---|---|---|
| * 1 : Silica fume is not included * 2 : The addition rate of a solid content with respect to 100 mass% of the refractory raw material | | | | | | | | | | | | | | | |

**[TABLE 3]**

| | Comparativ e Example 1 | Comparativ e Example 2 | Comparati ve Example 3 | Comparativ e Example 4 | Comparativ e Example 5 | Comparativ e Example 6 | Comparativ e Example 7 | Comparativ e Example 8 |
|---|---|---|---|---|---|---|---|---|
| Refractory raw material (particle size: 1 mm or more)/mass% | 50 | 5 | 39 | 39 | 39 | 39 | 39 | 39 |
| Refractory raw material (particle size: less than 1 mm)/mass% | 43 | 88 | 54 | 54 | 54 | 54 | 54 | 54 |
| Silica fume (less than 0.075mm)/mass% | 7 | 7 | 7 | 7 | 7 | 7 | 7 | 7 |
| Silica sol/mass% *² | 2 | 2 | 0,5 | 20 | 20 | 20 | 2 | 2 |
| Calcium hydroxide slurry/mass% *² | 0,5 | 0,5 | 0,5 | 0,5 | | 3 | | |
| Sodium silicate/mass% *² | | | | | | | 0,5 | |
| Potassium silicate/mass% *² | | | | | | | | 0,5 |
| Fluidity | × | × | ⊚ | × | ○ | ○ | ○ | ○ |
| Adherability | × | × | × | × | × | × | × | × |
| Curability | ○ | ○ | × | ⊚ | × | ⊚ | - | - |
| Explosion resistance | ○ | × | - | - | - | - | - | - |
| Comprehensive Evaluation | × | × | × | × | × | × | × | × |

| | | | | | | | | |
|---|---|---|---|---|---|---|---|---|
| * 1 : Silica fume is not included * 2 : The addition rate of a solid content with respect to 100 mass% of the refractory raw material | | | | | | | | |

In Tables 1 and 2, Inventive Examples 1-27 are wet spray materials which are encompassed within the scope of the present invention. Specifically, Inventive Examples 1 and 2 are examples in which the content rate of fine particles having a particle size of less than 1 mm in the refractory raw material is varied within the range specified in the present invention. Inventive Examples 3-7 are examples in which the addition rate of silica sol as a binder is varied within the range specified in the present invention, and Inventive Examples 8-12 are examples in which the addition rate of a slurry of calcium hydroxide as a quick setting agent is varied within the range specified the present invention. Inventive Examples 13-24 are examples which used a magnesium hydroxide slurry, and aqueous solutions of calcium chloride, potassium chloride, magnesium chloride, sodium chloride, calcium sulfate, potassium sulfate, sodium sulfate, calcium nitrate, magnesium nitrate, sodium nitrate, and potassium nitrate, respectively, in place of calcium hydroxide. Inventive Example 25 is an example which uses a calcium hydroxide slurry and a magnesium hydroxide slurry in combination, as a quick setting agent. Inventive Example 26 is an example in which no silica fume is included in the refractory raw material, and Inventive Example 27 is an example which includes alumina cement. In all Inventive Examples, the comprehensive evaluation was ∘ (Good) or ⊚ (Excellent). Specifically, according to the wet spray material in each Inventive Example, it is possible to shorten a time until the firing furnace becomes ready for operation after spraying onto a construction target surface of a firing furnace. In other words, according to the wet spray material in each Inventive Example, it is possible to shorten or omit a drying step after the completion of spraying, which makes it possible to reduce construction costs, and reduce the amount of fuel used for the drying step to zero or a significantly small value. Further, it is possible to contribute to the reduction of energy cost and to contribute to the reduction of CO₂ emissions.

Among them, Inventive Examples 4-6, Inventive Examples 9 and 10, Inventive Examples 12 and 13 and Inventive Example 25 are examples in which the content rate of the fine particles, the addition rate of silica sol, and the addition rate of the slurry fall within the above preferable ranges, respectively, and silica fume is contained in the refractory raw material in an amount of 3% by mass to 10% by mass, and were comprehensively evaluated as ⊚ (Excellent), i.e., were particularly excellent.

In Table 3, Comparative Example 1 is an example in which the content rate of the fine particles having a particle diameter of less than 1 mm in the refractory raw material is below the lower limit thereof specified in the present invention, and was evaluated as NG in terms of flowability and adherability. Further, Comparative Example 2 is an example in which the content rate of the fine particles having a particle diameter of less than 1 mm in the refractory raw material exceeds the upper limit value thereof specified in the present invention, and was evaluated as NG in terms of flowability, adherability, and explosion resistance.

Comparative Example 3 is an example in which the addition rate of silica sol as a binder is less than the lower limit value thereof specified in the present invention, and was evaluated as NG in terms of adherability and curability. Further, Comparative Example 4 is an example in which the addition rate of silica sol as a binder exceeds the upper limit thereof specified in the present invention, and was evaluated as NG in terms of fluidity and adherability. With regard to Comparative Examples 3-8, the evaluation of explosion resistance was omitted.

Comparative Example 5 is an example in which the addition rate of a slurry of calcium hydroxide, as a quick setting agent is below the lower limit thereof specified in the present invention (example in which the slurry of calcium hydroxide is not added), and was evaluated as NG in terms of adherability and curability. Further, Comparative Example 6 is an example in which the addition rate of the slurry of calcium hydroxide as a quick setting agent exceeds the upper limit thereof specified in the present invention, and was evaluated as NG in terms of adherability.

Comparative Examples 7 and 8 are examples using a slurry other than the inventive slurry or aqueous solution as a quick setting agent, and were evaluated as NG in terms of adherability. With regard to Comparative Examples 7 and 8, the evaluation of the curability was omitted.

### LIST OF REFERENCE SIGNS

1: pressure pump
2: nozzle
3: pipe
4: quick setting agent tank
5: quick setting agent supply pipe
S: construction target surface

## Claims

1. A wet spray material for a firing furnace, obtained by adding silica sol, and a slurry or aqueous solution of at least one or more selected from the group consisting of calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and potassium nitrate, to a refractory raw material comprising 55% by mass to 90% by mass of particles having a particle size of less than 1 mm, wherein:
the silica sol is added such that an addition rate of a silica solid content falls within the range of 1% by mass to 15% by mass, with respect to 100% by mass of the refractory raw material; and
the slurry or aqueous solution of at least one or more selected from the group consisting of calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and potassium nitrate, is added such that an addition rate of a solid content of the at least one or more selected from the group consisting of calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and potassium nitrate falls within the range of 0.01 % by mass to 1% by mass in total, with respect to 100% by mass of the refractory raw material.

2. The wet spray material as claimed in claim 1, wherein the refractory raw material comprises 3% by mass to 10% by mass of silica fume having a pH of 6.0 to 9.5.

3. A construction method using a wet spray material for a firing furnace, comprising: kneading a refractory raw material comprising 55% by mass to 90% by mass of particles having a particle size of less than 1 mm, with silica sol added thereto; pressure-feeding a resulting kneaded material to a nozzle; and spraying the kneaded material after adding thereto a slurry or aqueous solution of at least one or more selected from the group consisting of calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and potassium nitrate, in or just before the nozzle, wherein:
the silica sol is added such that an addition rate of a silica solid content falls within the range of 1% by mass to 15% by mass, with respect to 100% by mass of the refractory raw material; and
the slurry or aqueous solution of at least one or more selected from the group consisting of calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and potassium nitrate, is added such that an addition rate of a solid content of the at least one or more selected from the group consisting of calcium hydroxide, magnesium hydroxide, calcium chloride, potassium chloride, magnesium chloride, sodium chloride, calcium sulfate, potassium sulfate, sodium sulfate, calcium nitrate, magnesium nitrate, sodium nitrate, and potassium nitrate falls within the range of 0.01 % by mass to 1% by mass in total, with respect to 100% by mass of the refractory raw material.

4. The construction method as claimed in claim 3, wherein the refractory raw material comprises 3% by mass to 10% by mass of silica fume having a pH of 6.0 to 9.5.

5. The construction method as claimed in claim 4, wherein the kneaded material has a pH value ranging from 7 to 9.
